Europäisches Patentamt

European Patent Office

Office européen des brevets

(11) Numéro de publication: **0 047 213**
**B1**

(12) **FASCICULE DE BREVET EUROPEEN**

(45) Date de publication du fascicule du brevet: **13.02.85**

(51) Int. Cl.⁴: **B 64 G 1/44**

(21) Numéro de dépôt: **81401357.9**

(22) Date de dépôt: **27.08.81**

(54) **Dispositif d'éloignement pour panneau solaire de satellite.**

(30) Priorité: **02.09.80 FR 8018917**

(43) Date de publication de la demande:
**10.03.82 Bulletin 82/10**

(45) Mention de la délivrance du brevet:
**13.02.85 Bulletin 85/07**

(84) Etats contractants désignés:
**CH DE GB IT LI NL SE**

(56) Documents cités:
**DE-A-2 542 404**
**US-A-3 295 809**

(73) Titulaire: **SOCIETE NATIONALE INDUSTRIELLE AEROSPATIALE**
**37 boulevard de Montmorency**
**F-75016 Paris Cedex 16 (FR)**

(72) Inventeur: **Poveda, Pierre André**
**29, rue du Koenigstein**
**F-06110 Le Cannet (FR)**
Inventeur: **Barkats, Gérard**
**433, rue Janvier Pasero**
**F-06210 Mandelieu (FR)**
Inventeur: **Marello, George**
**520, rue Janvier Pasero**
**F-06210 Mandelieu (FR)**

(74) Mandataire: **Rinuy, Guy et al**
**14, Avenue de la Grande Armée**
**F-75017 Paris (FR)**

EP 0 047 213 B1

Courier Press, Leamington Spa, England.

## Description

La présente invention concerne, sur un satellite, un dispositif assurant la liaison d'un panneau solaire orientable, à l'organe moteur qui en assure son orientation.

Ce dispositif est destiné en particulier à être monté sur un satellite dont le corps est asservi à présenter l'un de ses axes dans une direction déterminée, celle de la terre par exemple, tandis que le ou les panneaux solaires sont asservis au mouvement relatif du soleil.

Considérant d'une part, la présence du corps du satellite et de divers appendices opaques qui peuvent occulter le rayonnement solaire, d'autre part la nécessité d'illuminer à chaque instant (et notamment lors des solstices) la totalité des cellules du panneau, il apparaît nécessaire, de situer les cellules les plus proches du satellite à une distance minimale de celui-ci.

En outre, le panneau se présentant sous deux aspects différents suivant qu'il est replié sous la coiffe du lanceur ou déployé en orbite, il apparaît souhaitable, pour situer au mieux dans les deux cas la position du panneau par rapport au satellite et à la coiffe du lanceur, que les centres géométriques du panneau, dans ces deux configurations, ne soient pas situés dans le même plan perpendiculaire à l'axe lanceur.

Il faut enfin que le dispositif présente en position repliée un encombrement minimal, afin de consacrer le maximum d'espace aux panneaux couverts de cellules.

Toutes ces contraintes conduisent à définir un type de dispositif d'éloignement et de déploiement pour panneau solaire de satellite dont les conditions de fonctionnement se trouvent satisfaites par la mise en oeuvre de la présente invention.

La présente invention concerne le cas plus particulièrement contraignant d'un panneau solaire composé de plusieurs volets repliés en accordéon sous la coiffe du lanceur, durant la phase de lancement du satellite, et dont les charnières d'articulation ont leur axe sensiblement parallèle à l'axe du lanceur.

On connaît déjà, par le brevet DE—A—25 42 404 un dispositif d'éloignement et de déploiement pour panneau solaire de satellite du type à plusieurs volets initialement repliés en accordéon contre le satellite, destiné à amener ledit panneau en une configuration déployée dans laquelle le volet le plus proche du satellite est à une distance minimale de celui-ci. Ce dispositif, en forme d'étrier rigide, est relié, d'une part, à un bloc palier formant chape d'orientation liée au satellite et ayant un axe de rotation perpendiculaire à l'axe du satellite, par articulation autour d'un premier axe perpendiculaire à l'axe de la chape d'orientation; il est en outre relié, d'autre part, audit volet le plus proche du satellite par articulation autour d'un second axe parallèle au premier axe en configuration déployée. Un tel dispositif ne permet pas de satisfaire à l'exigence précitée d'un décalage, parallèlement à l'axe du satellite, entre les centres géométriques du panneau dans ses configurations repliée et déployée.

Le dispositif d'éloignement et de déploiement conforme à l'invention permet d'amener le panneau tout en le décalant parallèlement à l'axe du satellite, de sa position repliée contre le satellite, durant la phase de lancement, en une position déployée, en orbite, pour laquelle les cellules solaires du panneau les plus proches du satellite sont situées à une distance prédéterminée de celui-ci, grâce à sa structure en deux tronçons articulés.

Plus précisément, l'invention propose un dispositif d'éloignement et de déploiement pour panneau solaire de satellite, du type à plusieurs volets initialement repliés en accordéon contre le satellite, destiné à amener ledit panneau en une configuration déployée dans laquelle le volet le plus proche du satellite est à une distance minimale de celui-ci, ce dispositif, relié d'une part à une chape d'orientation, liée au satellite et ayant un axe de rotation perpendiculaire à l'axe du satellite, par articulation autour d'un premier axe perpendiculaire à l'axe de la chape d'orientation, et d'autre part audit volet le plus proche du satellite par articulation autour d'un second axe, parallèle au premier axe en configuration déployée, étant caractérisé en ce qu'il est formé de deux poutres de longueurs respectives a et b mesurées perpendiculairement auxdits premier et second axes, respectivement, articulées entre elles selon un troisième axe qui leur est sensiblement transversal et qui fait avec les premier et second axes des angles $\alpha$ et $\beta$, respectivement, ces longueurs et ces angles satisfaisant au système d'équations:

$$a+b=E$$
$$\alpha=\beta$$
$$a \sin (\alpha+\beta)=D$$
$$b-a \cos (\alpha+\beta)=\frac{L}{2}$$

où:

— E est la distance requise, en configuration déployée entre les premier et second axes;
— D est la distance, en configuration repliée, entre les plans transversaux du satellite comportant l'axe de rotation de la chape d'orientation et l'axe d'orientation du panneau solaire; et
— L est la distance entre deux axes voisins d'articulation des volets du panneau solaire.

D'autres caractéristiques, avantages et particularités de la présente invention ressortiront de la description qui en est donnée ci-après, en référence aux dessins schématiques annexés représentant, à titre d'exemple préférentiel, une forme de réalisation possible de ladite invention.

Sur ces dessins:

— la figure 1 est un schéma représentant en élévation le dispositif selon l'invention, lorsque le panneau solaire est en position déployée par rapport au satellite; et
— la figure 2 est un schéma représentant le même dispositif, lorsque le panneau solaire est en position repliée de stockage contre le satellite.

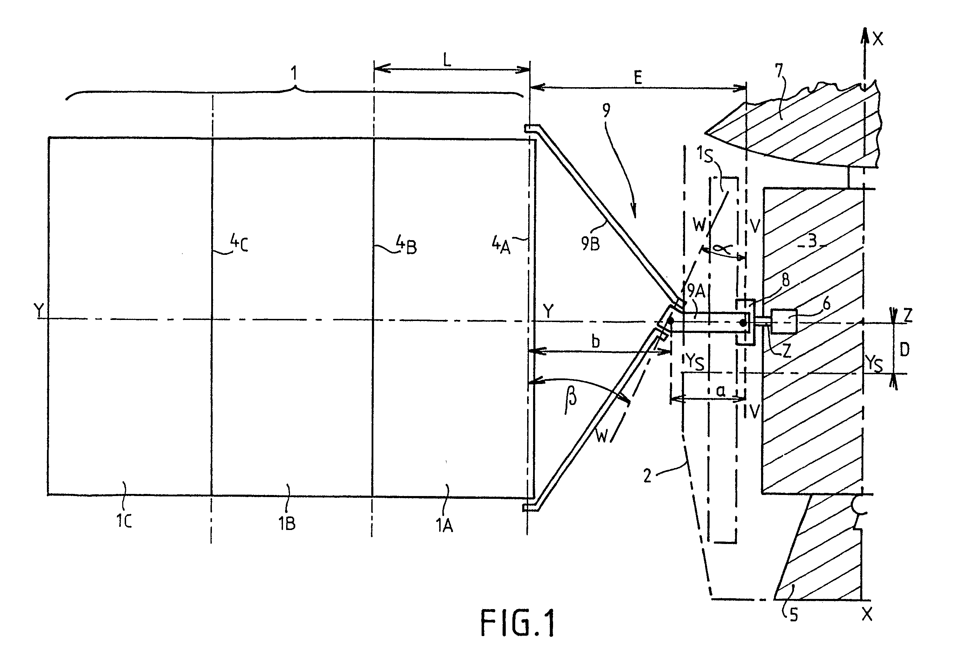

Afin de mieux mettre en évidence les caractéristiques de l'invention, on a représenté sur les dessins le cas particulièrement contraignant d'un panneau solaire, désigné par la référence générale 1, composé de plusieurs volets tels que 1A, 1B, 1C qui sont repliés en accordéon, à l'intérieur de la coiffe 2 représentée en trait mixte sur la figure 1, pour occuper, durant la phase de lancement du satellite 3, la position de stockage schématisée par le rectangle en trait mixte référence 1S. Il y a lieu de noter, de plus, que les charnières d'articulation telles que 4A, 4B, 4C des volets ont, durant ladite phase de langement, leur axe sensiblement parallèle à l'axe XX du lanceur 5.

Le dispositif d'éloignement doit remplir deux fonctions:

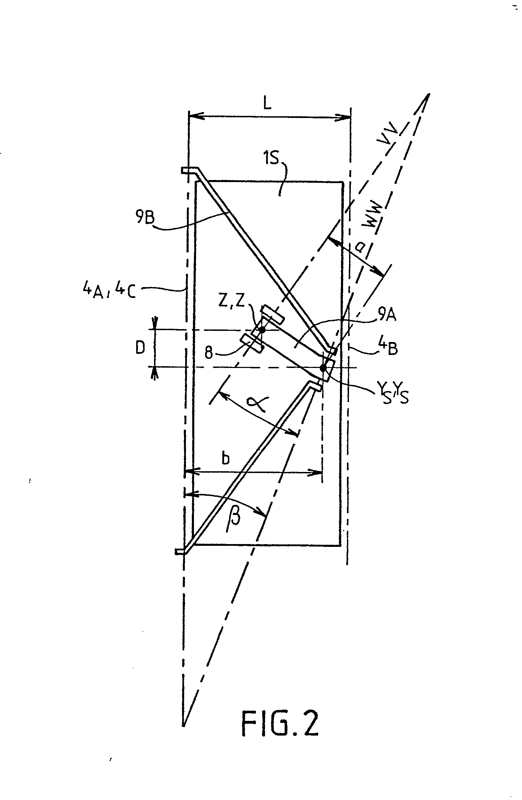

— d'une part, assurer la liaison du panneau solaire 1 à un moteur d'entraînement 6 qui en assure l'orientation autour de son axe longitudinal Z—Z;
— d'autre part, assurer la translation du panneau solaire 1 de la position repliée de la figure 2 à la position déployée de la figure 1, aux fins d'éloigner le premier volet 1A porteur de cellules solaires pour éviter l'ombre portée notamment des antennes telle que 7, sur les cellules solaires.

Du point de vue des contraintes imposées dans le cas du problème à résoudre, il y a lieu de noter que la position du générateur solaire 1S, durant la phase de lancement, dépend des trois contraintes géométriques suivantes:

— le volume de la coiffe 2;
— la structure du satellite 3;
— les antennes 7.

La position de l'axe ZZ du moteur d'entraînement 6 dépend elle-même de la position du centre de gravité du satellite.

Or, l'étude d'implantation du générateur solaire en position repliée 1S montre que, dans la plupart des cas, et notamment dans celui envisagé, il est impossible d'aligner l'axe ZZ du moteur 6 et l'axe YS—YS du générateur solaire en position repliée 1S.

Ceci complique la conception du dispositif d'éloignement du panneau solaire qui doit permettre un décalage D entre l'axe ZZ du moteur 6 et l'axe YS—YS du générateur solaire en position repliée 1S et permettre l'alignement entre ce même axe ZZ du moteur 6 et l'axe d'orientation YY du générateur solaire en position éloignée 1.

Les paramètres imposés au dispositif d'éloignement sont les suivantes:

— la distance E comprise, en position déployée, entre l'axe d'articulation V—V reliant la chape d'orientation (schématisé en 8) au dispositif d'éloignement désigné par la référence générale 9, d'une part, et l'axe d'articulation 4A entre ce même dispositif 9 et le premier volet 1A porteur de cellules du panneau solaire 1, d'autre part;
— la distance D comprise, en position repliée, entre, d'une part, l'axe de rotation ZZ du mécanisme d'orientation 6, 8 et l'axe d'orientation YS—YS du panneau solaire, d'autre part, mesurée parallèlement à l'axe du satellite;
— la distance L entre les axes d'articulation 4A, 4B, 4C d'un volet 1A, 1B ou 1C du panneau solaire 1.

Conformément à l'invention, le dispositif d'éloignement 9 se compose de deux poutres 9A et 9B articulées entre elles selon l'axe W, W et articulées, par ailleurs, l'une 9A, sur le mécanisme d'orientation 8 selon l'axe V, V et l'autre 9B, sur le premier volet 1A porteur de cellules du panneau solaire 1 selon l'axe 4A.

Les paramètres disponibles pour respecter les valeurs spécifiées de E et de D sont les suivants:

1. la longueur a de la première poutre 9A;
2. la longueur b de la seconde poutre 9B;
3. l'angle $\alpha$ entre les deux axes d'articulation V—V et W—W de la première poutre 9A;
4. l'angle $\beta$ entre les deux axes d'articulation W—W et 4A de la deuxième poutre 9B.

On voit immédiatement que pour pouvoir répondre aux conditions imposées par E et D, c'est-à-dire que le générateur solaire puisse passer de la position repliée de la figure 2 à la position déployée de la figure 1, tout en respectant, dans chacune des deux positions, les impératifs qui ont été exposés précédemment, le dispositif d'éloignement à deux poutres doit répondre au système d'équations suivant:

$$a+b=E$$
$$\alpha=\beta$$
$$a \sin (\alpha+\beta)=D$$
$$b-a \cos (\alpha+\beta)=\frac{L}{2}$$

La résolution de ce système permet de fixer les valeurs a, b, $\alpha$ et $\beta$ d'un satellite donné.

Le dispositif d'éloignement affecte avantageusement la forme générale d'une fourche à deux dents (ou d'un Y renversé sur l'horizontale). La poutre 9A constitue le manche de la fourche et s'articule selon V—V sur la chape d'orientation 8 liée au rotor du moteur 6 (l'ensemble constituant le mécanisme d'orientation) et sert, à son autre extrémité, d'axe d'articulation W—W à la fourche proprement dite 9B dont les deux extrémités servent de point d'articulation à l'axe 4A du premier volet 1A porteur de cellules du panneau solaire. Les autres volets 1B et 1C viennent se replier en accordéon en position de stockage contre le satellite durant la phase de lancement.

Cette forme de réalisation présente l'avantage d'un encombrement minimal en position repliée, les éléments articulés s'emboîtant les uns dans les autres.

Bien entendu, un système câbles et à pignons, d'un type quelconque connu (non représenté) assure la coordination du dépliement du dispositif d'éloignement ainsi que celui des volets du panneau solaire lorsque la première poutre 9A est entraînée en rotation autour de son axe d'articulation V—V, pour passer de sa position repliée de la figure 2 à sa position déployée de la figure 1.

## Revendications

1. Dispositif d'éloignement et de déploiement (9) pour panneau solaire (1) de satellite du type à plusieurs volets (1A, 1B, 1C) initialement repliés en accordéon contre le satellite (3), destiné à amener ledit panneau en une configuration déployée dans laquelle le volet (1A) le plus proche du satellite est à une distance minimale de celui-ci, ce dispositif (9), relié d'une part à une chape d'orientation (8), liée au satellite et ayant un axe de rotation (Z—Z) perpendiculaire à l'axe (X—X) du satellite, par articulation autour d'un premier axe (V—V) perpendiculaire à l'axe (Z—Z) de la chape d'orientation (8), et d'autre part audit volet (1A) le plus proche du satellite par articulation autour d'un second axe (4A), parallèle au premier axe (V—V) en configuration déployée, étant caractérisé en ce qu'il est formé de deux poutres (9A, 9B) de longueurs respectives a et b mesurées perpendiculairement auxdits premier (V—V) et second (4A) axes, respectivement, articulées entre elles selon un troisième axe (W—W) qui leur est sensiblement transversal et qui fait avec les premier et second axes (V—V, 4A) des angles $\alpha$ et $\beta$, respectivement, ces longueurs et ces angles satisfaisant au système d'équations:

$$a+b=E$$
$$\alpha+\beta$$
$$a \sin (\alpha+\beta)=D$$
$$b-a \cos (\alpha+\beta)=\frac{L}{2}$$

où:

— E est la distance requise, en configuration déployé entre les premier et second axes (V—V, 4A);

— D est la distance, en configuration repliée, entre les plans transversaux du satellite comportant l'axe de rotation (Z—Z) de la chape d'orientation (8) et l'axe d'orientation (YS—YS) du panneau solaire; et

— L est la distance entre deux axes voisins d'articulation (4A, 4B, 4C) des volets (1A, 1B, 1C) du panneau solaire (1).

2. Dispositif d'éloignement et de déploiement pour panneau solaire de satellite selon la revendication 1, caractérisé en ce que le dispositif affecte la forme générale d'une fourche à deux dents dont le manche est constitué par la première poutre (9A) dont une extrémité s'articule, par un système à la cardan, sur la chape d'orientation (8) et dont l'autre extrémité constitue l'axe d'articulation (W—W) de la deuxième poutre (9B) constituée, elle-même, de deux bras dont les extrémités libres servent de point d'articulation à l'axe d'articulation (4A) du premier volet (1A) porteur des cellules solaires du panneau (1).

3. Dispositif d'éloignement et de déploiement pour panneau solaire de satellite selon l'une quelconque des revendications 1 ou 2, caractérisé en ce qu'un système à câbles et à pignons d'un type quelconque connu assure la coordination du dépliement des deux poutres (9A, 9B) ainsi que celui des volets (1A, 1B, 1C) du panneau solaire (1) lorsque la première poutre (9A) est entraînée en rotation autour de son axe d'articulation (V—V) pour passer de sa position repliée à sa position déployée.

## Patentansprüche

1. Ausfahr- und Ausbreitungsvorrichtung (9) für ein Satelliten-Solarpanel (1) des Typs mit mehreren, ursprünglich ziehharmonikaartig an den Satelliten (3) herangeklappten Flügeln (1A, 1B, 1C), die zum Ausbreiten des Panels in eine ausgebreitete Stellung bestimmt ist, in der der dem Satelliten am nächsten gelegene Flügel (1A) sich in einem minimalen Abstand von diesem befindet und die einerseits mit einem mit dem Satelliten verbundenen Schwenkbügel (8), der eine zur Achse (X—X) des Satelliten senkrechte Drehachse (Z—Z) besitzt, durch gelenkige Anordnung um eine erste, zur Achse (Z—Z) des Schwenkbügels (8) senkrechte Achse (V—V) und andererseits mit dem dem Satelliten am nächsten gelegenen Flügel (1A) durch gelenkige Anordnung um eine zweite Achse (4A) verbunden ist, die in Ausbreitungsstellungr zur ersten Achse (V—V) parallel ist, dadurch gekennzeichnet, daß sie aus zwei Trägern (9A, 9B) mit senkrecht zu den ersten (V—V) und zweiten Achsen (4A) gemessenen Längen a bzw. b besteht, die gemäß einer dritten Achse (W—W) miteinander gelenkig verbunden sind, welche dazu im wesentlichen quer verläuft und mit den ersten und zweiten Achsen (V—V, 4A) Winkel $\alpha$ bzw.

$\beta$ einschließt, wobei die Längen und Winkel die Gleichungen:

$$a+b=E$$
$$\alpha=\beta$$
$$a \sin (\alpha+\beta)=D$$
$$b-a \cos (\alpha+\beta)=\frac{L}{2}$$

erfüllen, in denen

E der in der ausgebreiteten Stellung erforderliche Abstand zwischen den ersten und zweiten Achsen (V—V, 4A)

D der Abstand zwischen den Querebenen des Satelliten, in denen die Drehachse (Z—Z) des Schwenkbügels (8) und die Schwenkachse (YS—YS) des Solarpanels liegen, in zusammengeklappter Stellung, und

L der Abstand zwischen zwei benachbarten Gelenkachsen (4A, 4B, 4C) der Flügel (1A, 1B, 1C) des Solarpanels (1) ist.

2. Ausfahr- und Ausbreitungsvorrichtung für ein Satelliten-Solarpanel nach Anspruch 1, dadurch gekennzeichnet, daß sie die allgemeine Forme einer zweizinkigen Gabel hat, deren Stiel durch den ersten Träger (9A) gebildet ist, dessen eines Ende über ein Kardansystem an dem Schwenkbügel (8) angelenkt ist und dessen anderes Ende die Drehachse (W—W) des zweiten Trägers (9B) bildet, der seinerseits aus zwei Armen besteht, deren freie Enden als Drehpunkt mit der Drehachse (4A) des ersten, Solarzellen des Solarpanels (1) tragenden Flügels (1A) dienen.

3. Ausfahr- und Ausbreitungsvorrichtung für ein Satelliten-Solarpanel nach einem der Ansprüche 1 oder 2, dadurch gekennzeichnet, daß ein Seilzug- und Zahnradsystem beliebiger bekannter Art die Koordinierung des Ausfahrens der beiden Träger (9A, 9B) und der Flügel (1A, 1B, 1C) des Solarpanels (1) gewährleistet, wenn der erste Träger (9A) zum Ausfahren aus seiner zusammengeklappten Stellung in die ausgefahrene Stellung um seine Gelenkachse (V—V) geschwenkt wird.

## Claims

1. A device (9) for moving away and folding out a solar panel (1) for satellite of the type with several flaps (1A, 1B, 1C) initially folded up in accordion pleats against the satellite (3), and intended for bringing said panel to a folded out configuration in which the flap (1A) closest to the satellite is at a minimum distance therefrom, such device (9), connected on the one hand to an orientation shell (8), connected to the satellite and having a rotational axis (Z—Z) perpendicular to the satellite axis (X—X), through articulation about a first axis (V—V) perpendicular to the axis (Z—Z) of the orientation shell (8), and on the other hand, to said flap (1A) closest to the satellite through articulation about a second axis (4A) parallel to the first axis (V—V) in the folded out configuration, being characterized in that it is formed from two beams (9A, 9B) of respective lengths a and b measured perpendicularly to said first (V—V) and second (4A) axes, respectively, and articulated to one another about a third axis (W—W) which is substantially transverse thereto and makes with the first and second axes (V—V, 4A) respective angles $\alpha$ and $\beta$, with such lengths and angles satisfying the equation system:

$$a+b=E$$
$$\alpha=\beta$$
$$a \sin (\alpha+\beta)=D$$
$$b-a \cos (\alpha+\beta)=\frac{L}{2}$$

where:

— E is the required distance in the folded out configuration between the first and second axes (V—V, 4A);

— D is the distance in the folded up configuration between the transverse planes of the satellite comprising the rotational axis (Z—Z) of the orientation shell (8) and the orientation axis (YS—YS) of the solar panel; and

— L is the distance between two adjoining articulation axes (4A, 4B, 4C) of the flaps (1A, 1B, 1C) of the solar panel (1).

2. A device for moving away and folding out a solar panel for satellite according to claim 1, characterized in that the device takes generally the form of a fork with two prongs, the handle of which is constituted by the first beam (9A), one end of which is articulated through a cardanic system to the orientation shell (8) whereas its other end constitutes the articulation axis (W—W) of the second beam (9B), itself consisting of two arms the free ends of which are used as articulational pivot for the articulation axis (4A) of the first flap (1a) carrying the solar cells of the panel (1).

3. A device for moving away and folding out a solar panel for satellite according to any one of claims 1 or 2, characterized in that a cable and gear system of any known type provides for coordination in the folding out of both beams (9A, 9B) as well as that of the flaps (1A, 1B, 1C) of the solar panel (1) when the first beam (9A) is brought into rotation about its articulation axis (V—V) to pass from the folded up position to the folded out position thereof.

FIG.1

FIG.2